# EUROPEAN PATENT SPECIFICATION

(11) **EP 1 023 489 B1**
(45) Date of publication and mention of the grant of the patent: **10.03.2004**
(21) Application number: 98930884.6
(22) Date of filing: 17.06.1998
(51) Int. Cl.: D21F 1/00, B23K 26/00, D06H 7/22, D06C 13/00

(54) **DEVICE AND METHOD FOR CUTTING AND REMOVING YARNS**
VORRICHTUNG UND VERFAHREN ZUM SCHNEIDEN UND ENTFERNEN VON GARNEN
DISPOSITIF ET PROCEDE POUR COUPER ET EVACUER DES FILS

(30) Priority: 27.06.1997 GB 9713502
(43) Date of publication of application: 02.08.2000
(73) Proprietor: Voith Fabrics Heidenheim GmbH & Co.KG, 89522 Heidenheim (DE)
(72) Inventor: THEWLIS, Roger George, Skipton, West Yorkshire BB8 5TB (GB)
(74) Representative: Middlemist, Ian Alastair
(86) International application number: PCT/GB1998/001781
(87) International publication number: WO 1999/000546

(56) References cited:
- EP-A- 0 353 887
- EP-A- 0 963 806
- DE-A- 4 333 877
- US-A- 3 634 646
- US-A- 4 159 558
- US-A- 4 974 300
- US-A- 5 366 778
- US-A- 5 367 141
- US-A- 5 546 643
- ZNOTINS T. A. ET AL.: "EXCIMER LASERS: AN EMERGING TECHNOLOGY IN MATERIALS PROCESSING" LASER FOCUS INCL. V NO. 2450 ELECTRO-OPTICS, SINCE 1983, vol. 23, no. 5, May 1987, page 54, 56, 58, 60, 63/64, 66, 68, 70 XP000712134

## Description

This invention relates to a device for use in cutting selected yarns in an industrial fabric either for severing or scoring the yarns or removing parts of yarn e.g. analogous to shaving or paring a part or layer from a yarn and to methods for use of such a device.

In joining the ends of a fabric to form a continuous endless fabric such as in making a paper machine forming fabric, it is known to effect the join by removing weft yarns (cross machine direction (CMD) yarns) from each end of the fabric, leaving fringes of warp yarns running in the intended machine direction (MD yarns). The fringed yarns may often be tied in knots of say 30 yarns, or a window 70-160 mm long extending across the entire width of the fabric may be created near each end by removing weft yarns leaving a strip of woven fabric at the very edge of the fabric of up to 80 mm deep and extending across the entire fabric width.

Auxiliary weft yarns are then woven into the fringed warp yarns in a seaming machine to provide an endless fabric which is in effect a single continuous woven entity.

During this seaming operation, a thread separator (see for example US 4,974,300) is used to select warp yarns from the storage bundles in alternating sequence from each side of the shed formed by the auxiliary warp in the seaming machine. The warp yarns are stored either side of the auxiliary warp in a magazine, storage bundle or woven strip. WO 95/08668 describes one such seaming process.

At present, in order to create the window, or storage bundle, a skilled worker must cut a warp yarn near to the end of the fabric at regular intervals across the width of the fabric and then proceed to remove the weft yarns one by one from the window region. A typical forming fabric may contain 50-80 weft yarns per cm and 10-100 warp yarns per cm so that to form a window or storage bundle can take as long as three days. This task requires skilled labour since care has to be taken not to remove yarns from the fabric with too much force, otherwise distortion of the woven fabric will occur. Simply removing each weft yarn with a single strong pull would make the fabric crease and deform resulting in the need for time consuming repair of the fabric. For this reason the weft yarn has to be cut at several positions, across the width of the fabric and removed a section at a time. This task is repetitive and often results in the worker experiencing frequent strains and injuries and is also demanding on the eyesight.

Mechanical cutting devices have been proposed but they often give poor results as the yarns are difficult to cut, adjacent yarns are easily damaged, cutter blades have to be replaced frequently due to loss of sharpness and cutting only one layer in a multi-layer structure is difficult.

DE-A-4,333,877 describes apparatus for simultaneously cutting several layers of a web of fusible material using a beam from a single laser cutter. This arrangement is so far as the operation and control of the laser is concerned relatively crude in that it is necessary for the laser cutter to cut the full width from side to side and completely through the superposed web layers. Precise accuracy is not required and it is preferable for the lateral travel and depth penetration to be greater than required by the trade in hand rather than risk insufficient travel or depth. On the other hand, as shown in US 5,367,141 it is known in cutting garment patterns in the clothing trade, to simultaneously cut a plurality of layers of fabric using laser radiation which is selectively blocked by a pattern which only allows the radiation to pass where it is required to cut the fabric. The arrangement uses optical means to expose all selected areas of the fabric at once to the radiation, and there is no guidance to for example move the laser cutter itself.

Similarly, EP-0,963,806 describes a process for preweakening plastics members such as an automobile trim cover using a laser beam which is guided along a predetermined path, and is controllable as to the depth of cut or score line to ensure that the plastics member is not cut completely through.

US 5,366,778 illustrates a method of preparing a papermaking fabric for seaming and effecting the seam which involves using a pair of laser cutters to produce interlockable "castellated" ends to the fabric, so that their ends can be interdigitated after removal of selected cross-machine yarns for passage of a pintle yam or wire. Although shown in the drawings as consisting of two machine-direction yarns each, these alternating projections and recesses always comprise a plurality of yarns.

Lasers are known to perforate plastics films or sheets to provide foraminous structures for use as or in papermaking fabrics. Conventional "burn through" lasers have proven to be unsatisfactory for cutting yarns in preparing a fabric for seaming as charred material is deposited in the region where laser cutting has taken place, which contaminates the fabric and gives it a dirty appearance; the laser cannot distinguish between different polymer types and as a result in a fabric woven from say a mixture of polyester and nylon yams, frequently found in forming fabrics, the laser will either cut the yam needing less energy input perfectly and cut the yarn needing more energy input less perfectly or it will cut the yam needing more energy input perfectly and then "over-cut" the yarn needing less energy input, leading to charring and melting of the yam even where the less energy input yarn is not in direct contact with the laser. The depth of the laser cut cannot be altered so yarns cannot be cut at cross-over points, only straight lines can be cut through yarns and for IR cutting complex optics are required for beam control.

An ablation laser, used in accordance with the invention in a cutting device operates by ablation of the molecular structure of the polymer using high intensity UV radiation to break molecular bonds in the polymer, vaporising the material into radicals. The laser may be an excimer laser, in which the beam requires a gas environment in which the ablate, or a YAG laser, which needs no gas environment, which emits light outside the visible spectrum, usually in the UV range.

This ablation laser does not melt yarns and thus its energy does not have to be adjusted to cut yarns of different polymer types, no char is formed, it will not melt yarns adjacent to the target yarn and the depth of the cut can be controlled. This makes it possible to cut yarns at cross-over points (i.e. knuckles of floats) so that only one yarn at each cross-over point is cut. Apart from the ability to cut fewer warp yarns an advantage of cutting weft yarns at the cross-over point is that the laser can be instructed to follow a cutting pattern determined by the so-called twill line of the fabric, these being clearly visible diagonal lines formed by yarn cross-over points, furthermore, controlling the depth of laser cut enables multi-layer fabrics to be cut by this method also.

An object of the invention is to provide a device for cutting selected yarns in preparation of a fabric for seaming which will enable the preparation time to be significantly reduced, and overcome some of the shortcomings of bladed cutting devices.

According to the invention there is provided a device for preparing a papermachine fabric for seaming by cutting and removing selected cross-machine direction yarns of the fabric, the device including an ablation or excimer laser, control means for guidance and operation of said laser to effect cutting of said selected yarns and a cut yarn extraction device to remove cut yarns from the fabric.

The means for controlling the laser may comprise depth control means for controlling the depth of cut of the laser and an imaging device which optically focuses on image of the operating area on a matrix of fibre optic ends, a fibre optic lead, connecting the matrix to an image processor, and an analysing device to which the digitised image is applied connected to a control system operating a slaved cutter positioning device which moves a cutter including the laser.

Preferably the laser is directed to project its beam axially down a probe tube shaped to provide a deflector for yarns to enable the tube to be moved through the fibre, and a needle shaped top.

Preferably the UV ablation laser means comprise solid state UV laser means and thus do not require- corrosive gases to operate, so that they are cheaper to operate than excimer lasers.

The invention also provides a method for joining the ends of a fabric by providing fringed ends or windows, wherein selected yarns i.e. mainly weft yarns and some warp yarns, are cut using a device according to the invention.

In a further step, the overlapped fringed yarns e.g. at opposite ends of a woven papermaking fabric are welded and then the ablation or excimer laser used to restore the weave pattern in the joint region by carving and trimming off areas of excess polymer where the two yarn ends have been joined together.

The ablation laser may be mounted so as to project its beam axially along a vertically or inclinedly mounted probe tube, of, for example, wedge or oval in cross section. The probe may be movable along a set path through the fabric, e.g. following a weft yarn, the shape of the tube acting to move warp yarns out of the way to enable the laser to cut the weft yarn beneath. The tube may be formed with a vertical recess in the trailing side of the probe, down which the beam may be directed.

The invention will now be described by way of example, with reference to the accompanying drawings wherein:-
Fig. 1 is a block diagram illustrating the operation of the cutting device; and
Figs. 2a and 2b are diagrams illustrating a probe for direction of the laser beam.

For use in cutting warp yams in preparation for seaming of a fabric, such as a papermaker's forming fabric, a detailed image of the operating area is obtained by an imaging device 10, "Image Acquisition" which optically focuses the image on a matrix of fibre optic ends and the image is transferred via a fibre optic lead 11 to an image processor 12. The digitised image is applied to a device 13 which analyses the image to define the location of the image of a desired yarn ("Fibre Image Positioning") and supplies appropriate information to a control system 14.

Control system 14 uses this information to influence the operation of a slaved cutter positioning device 15, which moves a cutting device 16 as require in accordance with a pre-programmed routine in the control system 14 as updated by precise positional information provided via the image acquisition and analysis system 10,12,13. The system 14 also operates to "fire" the ablation laser in the device 16 when the cutting device is correctly positioned.

Positional information is also used by system 14 to operate a slaved cut fibre extraction device 17 which operates a mechanical fibre extraction system to remove cut yarns from the weave.

In a variation the ablation laser 16 may be operated to ablate cross-overs of threads (or weave knuckles) to a common planar surface.

In a further embodiment the laser 16 may be used to score the knuckles or floats of weft yarns in a fabric such as a paper machine forming fabric, in order to reduce edge curl. The laser 16 is used to form spaced notches or slots in the yarns to a depth of e.g. 50% of the thickness of the yarn.

The ablation laser used in the device 16 is a fourth harmonic UV laser, the beam having a wave length of up to 320 mm, typically 224-226 mm and a minimum size of 1.0 micron. This beam however may be made larger or smaller by masking techniques. The laser may fire 10 pulses per second. A vacuum or blower system is used to remove ablated molecules in order to avoid deposition of soot etc on the yarns. The ablation laser is typically a harmonic YAG laser, preferably a Q-switched YAG laser used in conjunction with frequency tripling or quadrupling crystals, e.g. a Nd:YAG laser.

The cutting speed is e.g. 1-15 yarns per second, and several lasers can be used in combination in one cutting machine.

The laser cut weft yarns may still be removed by hand, but as they have been cut at regular intervals. into small sections they can be removed quickly and easily. All the weft yarns may be removed from a 8 m wide x 10 cm deep strip of standard woven fabric in 8 hours, compared with three days for a standard manual technique.

In either the cutting or planarising process, the laser travels along a pre-selected path, or it can be programmed to follow certain features, such as twill lines. Alternatively it may follow yarns that contain or are coated with a material to make them stand out, e.g. an optical brightening agent for detection with UV light, metal to be detected by magnetism induction or conductivity or pigments or dyes for colour recognition systems or IR detection.

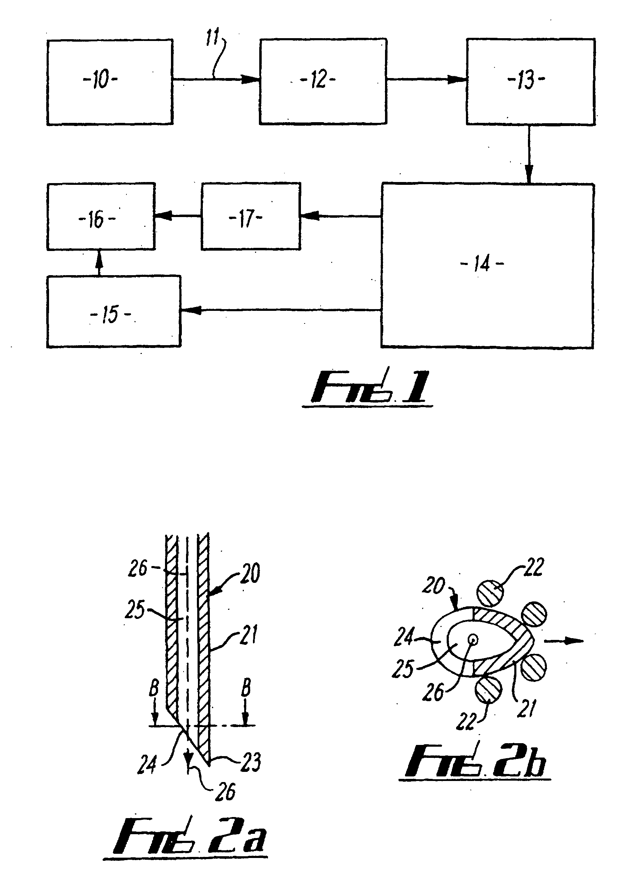

Figs. 2a and 2b show a probe for use in positioning the laser beam on a target by deflecting yarns to reach a target yarn. The probe 20 comprises an e.g. oval cross section tube, with the narrower side 21 forming a wedge at a leading side of the tube which acts as a deflector to push aside yarns 22, ploughshare-like, to enable the probe to be moved through a fabric and directed at the target yarns. The end of probe 20 is cut at a slant providing a needle-like probe point 23 at the tip of the leading side 21, and a rearwardly directed inclined surface 24 which exposes an interior bore 25 of the probe as a channel in the rear of the point 23.

The laser beam 26 is directed axially down the probe tube 20 to impinge on any target which is aligned with the probe.

The cutting machine equipped with one or a plurality of cutting devices according to the invention is equipped with an imaging system which may include a camera which registers a picture of the fabric, then using standard image enhancement and image processing techniques (e.g.. Fast Fourier Transform) a digital map is created, which is used by the laser to follow the cutting path. The digital maps and/or paths for certain weave structures may be stored on computer disc and loaded into the control system 14 when appropriate.

An image analysis system may be used to compare images of a completely cut fabric region with the actual cut fabric region to alert the machine operator to any discrepancy due to the presence of uncut yarns which should have been cut. The machine may be programmed to automatically cut yarns highlighted by this image comparison system.

A third-harmonic ablation laser may be used in place of the fourth-harmonic laser described in relation to the preferred embodiment. This emits UV-laser energy of longer wavelength i.e. close to the IR region and therefore generates more heat than a fourth-harmonic laser, but it is cheaper to purchase, operate and maintain.

The method and apparatus of the invention may be used in any process involving cutting yarns in a woven textile structure, e.g. base cloths for ENP belts, transfer belts or press felts, dryer fabrics, filter belts, conveyor belts and the like.

## Claims

1. A device for preparing a papermachine fabric for seaming by cutting and removing selected cross-machine direction yarns of the fabric the device including an ablation or excimer laser (16), control means (14) for guidance and operation of said laser (16) to effect cutting of said selected yarns and a cut yarn extraction device (17) to remove cut yarns from the fabric.

2. A device according to claim 1 wherein the laser (16) is controlled by control means (14) responsive to an imaging device (10) which optically focuses an image of the operating area on a matrix of fibre optic ends, a fibre optic lead (11) connecting the matrix to an image processor (12) and an analysing device (13) to which the digitised image is applied, which is connected to the control means (14).

3. A device according to any preceding claim wherein said laser is directed to project its beam axially down a probe tube, (20) shaped to provide a deflector for yarns to enable the tube to be moved through a fabric, and a needle shaped tip, (23) by cutting the free end of the probe tube at an angle to the axis of the tube.

4. A device according to any preceding claim wherein said ablation laser is a fourth-harmonic UV laser, with a beam wavelength of 224-226nm and a minimum size 20 microns.

5. A device according to claim 1 wherein said ablation laser is a harmonic Q-switched YAG laser.

6. A device according to claim 4 wherein said laser is a Nd:YAG laser.

7. A. device according to any preceding claim wherein a plurality of ablation lasers are used in combination.

8. A device according to any preceding claim wherein said laser is a third-harmonic laser.

9. A method for joining the ends of a fabric by providing fringed ends or windows, wherein selected yams are cut using a device according to any preceding claim.

## Patentansprüche

1. Vorrichtung zum Vorbereiten eines Papiermaschinengewebes zur Ausbildung einer Verbindungsnaht durch Abschneiden und Entfernen ausgewählter, in Maschinenquerrichtung liegender Fäden des Gewebes, wobei die Vorrichtung einen Ablations- oder Excimer-Laser (16), eine Steuervorrichtung (14) für die Steuerung und den Betrieb des Lasers (16) zum Abschneiden der ausgewählten Fäden und eine Entnahmevorrichtung für abgeschnittene Fäden (17) enthält, um abgeschnittene Fäden aus dem Gewebe zu entfernen.

2. Vorrichtung nach Anspruch 1,
bei der der Laser (16) von einer Steuervorrichtung (14) gesteuert wird, die auf eine Abbildungsvorrichtung (10) anspricht, welche auf optischem Wege eine Abbildung des Arbeitsbereiches auf eine Matrix aus Lichtleiterenden fokussiert, wobei ein Lichtleiterkabel (11) die Matrix mit einem Bildverarbeiter (12) und einer Analysiervorrichtung (13) verbindet, in die das digitalisierte Bild eingegeben wird, die mit der Steuervorrichtung (14) verbunden ist.

3. Vorrichtung nach einem vorhergehenden Anspruch,
bei der der Laser so ausgerichtet ist, daß sich sein Strahl axial nach unten entlang einer Sondenabtaströhre (20) erstreckt, die so geformt ist, daß ein Ablenker für Fäden gebildet ist, um die Röhre durch ein Gewebe bewegen zu können, sowie eine nadelförmige Spitze (23), die durch Anschneiden des freien Endes der Sondenabtaströhre in einem Winkel zur Achse der Röhre erzielt wird.

4. Vorrichtung nach einem vorhergehenden Anspruch,
bei der der Ablationslaser ein UV-Laser der vierten Harmonischen mit einer Wellenlänge des Strahles von 224 bis 226 nm und einer minimalen Größe von 20 Mikrometer ist.

5. Vorrichtung nach Anspruch 1,
bei der der Ablationslaser ein harmonischer gütegeschalteter YAG-Laser ist.

6. Vorrichtung nach Anspruch 4,
bei der der Laser ein Nd:YAG-Laser ist.

7. Vorrichtung nach einem vorhergehenden Anspruch,
bei der mehrere Ablationslaser in Kombination verwendet werden.

8. Vorrichtung nach einem vorhergehenden Anspruch,
bei der der Laser ein Laser der dritten Harmonischen ist.

9. Verfahren zum Verbinden der Enden eines Gewebes durch Ausbilden ausgefranster Enden oder Fenster, wobei unter Verwendung einer Vorrichtung gemäß einem vorhergehenden Anspruch ausgewählte Fäden abgeschnitten werden.

## Revendications

1. Dispositif pour préparer une toile de machine à papier pour jonction par découpe et évacuation de fils dans le sens transversal de la machine choisis de la toile, le dispositif comprenant un laser d'ablation ou à excimère (16), un moyen de commande (14) pour guider et actionner ledit laser (16) pour effectuer la découpe desdits fils choisis et un dispositif d'évacuation de fils coupés (17) pour enlever les fils coupés de la toile.

2. Dispositif selon la revendication 1 dans lequel le laser (16) est commandé par le moyen de commande (14) en fonction d'un dispositif d'imagerie (10) qui focalise optiquement une image de la zone opératoire sur une matrice d'extrémités de fibre optique, un conducteur de fibre optique (11) connectant la matrice à un processeur d'image (12) et à un dispositif d'analyse (13) auxquels l'image numérisée est appliquée, qui est connecté à ce moyen de commande (14).

3. Dispositif selon l'une quelconque des revendications précédentes dans lequel ledit laser est dirigé pour projeter son faisceau de manière axiale en descendant dans un tube de sonde (20) formée pour constituer un déflecteur pour les fils pour permettre que le tube soit déplacé à travers une toile, et une pointe en forme d'aiguille (23), en coupant l'extrémité libre du tube de sonde à un certain angle par rapport à l'axe du tube.

4. Dispositif selon l'une quelconque des revendications précédentes dans lequel ledit laser d'ablation est un laser UV de quatrième harmonique, avec une longueur d'onde de faisceau de 224 à 226 nm et une taille minimale de 20 microns.

5. Dispositif selon la revendication 1 dans lequel ledit laser d'ablation est un laser YAG déclenché harmonique.

6. Dispositif selon la revendication 4 dans lequel ledit laser est un laser Nd:YAG.

7. Dispositif selon l'une quelconque des revendications précédentes dans lequel une pluralité de lasers d'ablation sont utilisés en association.

8. Dispositif selon l'une quelconque des revendications précédentes dans lequel ledit laser est un laser de troisième harmonique.

9. Procédé pour joindre les extrémités d'une toile en formant des extrémités ou des fenêtres frangées, dans lequel les fils choisis sont coupés en utilisant un dispositif selon l'une quelconque des revendications précédentes.
